# EUROPEAN PATENT APPLICATION

(11) **EP 4 233 825 A1**
(43) Date of publication of application: **30.08.2023**
(21) Application number: 22194775.7
(22) Date of filing: 09.09.2022
(51) Int. Cl.: A61H 3/04

(54) **SAFETY WHEEL AND WALKING AID USING SAME**

(30) Priority: 25.02.2022 KR 20220024784
(71) Applicant: Auto&Robot Inc., Chungcheongnam 31416 (KR)
(72) Inventor: HAM, Hun Ju, 31537 Chungcheongnam-do (KR); KIM, Jong Sung, 26454 Gangwon-do (KR)
(74) Representative: Urizar Anasagasti, Jesus Maria

(57) **Abstract**

Proposed are a safety wheel mounted on a walking aid which is used when a patient or an elderly person with impaired mobility walks and to a walking aid using the safety wheel. The safety wheel is configured to be applied with a high braking force in case of sudden fall of a human body attributable to stepping or back-push, thereby protecting a user.

## Description

### BACKGROUND OF THE INVENTION

### Field of the Invention

The present disclosure relates to a safety wheel mounted on a walking aid which is used when a patient or an elderly person with impaired mobility walks and to a walking aid using the safety wheel. More particularly, the present disclosure relates to a safety wheel which is configured to be applied with a high braking force in case of sudden fall of a human body attributable to stepping or back-push, thereby protecting a user.

### Description of the Related Art

With the rapid aging of the world, walking aids that can help an elderly person with mobility difficulties or patients with reduced mobility due to acquired factors are widely distributed.

In other words, as is well known, walking aids are used for assistance when patients, the elderly, and a person with impaired legs or body walk, and these walking aids support the body when such persons deambulate or move to other places.

Conventional walking aids have various forms, but generally include a manipulation handle part that can be operated while pushing or pulling by gripping by hand, a body connected to the lower side of the manipulation handle part and usually formed by bending a steel pipe to form a frame, and a front wheel and a rear wheel provided at a lower end of the body.

In addition, the conventional walking aids are provided with a lever on the manipulation handle part and are connected a brake device capable of stopping the rear wheel with the lever, so that a user could stop the walking aid by operating the lever installed on the manipulation handle part.

However, when walking on a slope or flat surface, the walking aid's overturning phenomenon easily occurred due to the sudden weight shift of the user due to stepping or back-pushing, etc. Therefore, there is a need to develop a walking aid designed to prevent the occurrence of a safety accident in which the walking aid is overturned due to the sudden weight shift of the user.

### Document of Related Art

Korean Patent No. 10-0768645, "Parking Brake Device for Walking Aids" (Registration date: October 12, 2007)
Korean Patent No. 10-0902252, "Braking Device for Walking Aids" (Registration date: June 3, 2009)

### SUMMARY OF THE INVENTION

The present disclosure has been made in an effort to solve the above problems, and an objective of the present disclosure is to provide a safety wheel capable of preventing a fall accident that may occur when a user walks, and a walking aid using the same.

The safety wheel of the present disclosure includes a ring-shaped main wheel 100, an inner frame 200 positioned inside the main wheel 100, wherein the inner frame including at least two auxiliary wheels 210 that come into contact with an inner surface of the main wheel 100 and rotate when the main wheel 100 is driven, and a sliding block 300 installed to be movable under the guide of the inner frame 200.

In addition, the safety wheel of the present disclosure further includes a lower braking unit 400 installed at a lower side of the inner frame 200 and configured such that a first end thereof comes into contact with or is separated from the inner surface of the main wheel 100 according to a movement of the sliding block 300, and a first elastic member 500 configured to elastically support the lower braking unit 400 such that the first elastic member 500 is compressed only when a load equal to or higher than a preset modulus of elasticity is transferred thereto to cause the sliding block 300 to move the lower braking unit 400.

The auxiliary wheels 210 of the present disclosure are configured as a pair, wherein the safety wheel further includes a guide part 120 provided on the inner surface of the main wheel 100, and the guide part 120 is provided with a wheel guide groove 121 recessed from a surface at each of opposite edges, wherein the auxiliary wheels 210 are configured respectively to come into contact with the wheel guide grooves 121 provided on the opposite edges of the guide part.

Moreover, the safety wheel of the present disclosure further includes a control knob 600 installed in the lower braking unit 400 to adjust the modulus of elasticity of the first elastic member 500.

Meanwhile, the lower braking unit 400 further includes a lower friction part 420 rotatably installed at the first end thereof, wherein the lower friction part 420 is configured to provide a braking force by further rotating in a moving direction of the main wheel 100 while maintaining the contact with the inner surface of the main wheel 100 to provide a higher pressing force to the inner surface of the main wheel 100.

In the walking aid including the safety wheel of the present disclosure, the sliding block 300 is connected to a body frame 20 of a walking aid 10 and configured to transfer a load to the body frame 20 so that the sliding block 300 is moved when a user walks.

According to the present disclosure, the safety wheel is driven only when a predetermined load is transmitted to the walking aid may prevent the walking aid from arbitrarily moving.

In addition, when the walking aid collides due to sudden weight movement or back-push of the user, high braking torque is provided to the safety wheel, and the movement of the walking aid is restricted, thereby the safety wheel may prevent serious fall accidents and safety accidents.

### BRIEF DESCRIPTION OF THE DRAWINGS

FIG. 1 is a perspective view illustrating an embodiment in which a safety wheel is mounted in a walking aid of the present disclosure;
FIG. 2 is a side view illustrating a lower braking unit and a first elastic member of the present disclosure;
FIG. 3 is a partial perspective view illustrating a configuration of a guide part and an auxiliary wheel of the present disclosure;
FIG. 4 is a side view illustrating an embodiment of operation of a lower braking unit and a first elastic member of the present disclosure;
FIGS. 5A and 5B is a partial side views illustrating another embodiment of the lower braking unit of the present disclosure;
FIG. 6 is a side view illustrating an embodiment of a main component composing a safety wheel of the present disclosure.

### DETAILED DESCRIPTION OF THE INVENTION

Hereinafter, a safety wheel and a walking aid using the same of the present disclosure and an embodiment of the present disclosure will be described in detail with reference to the drawings.

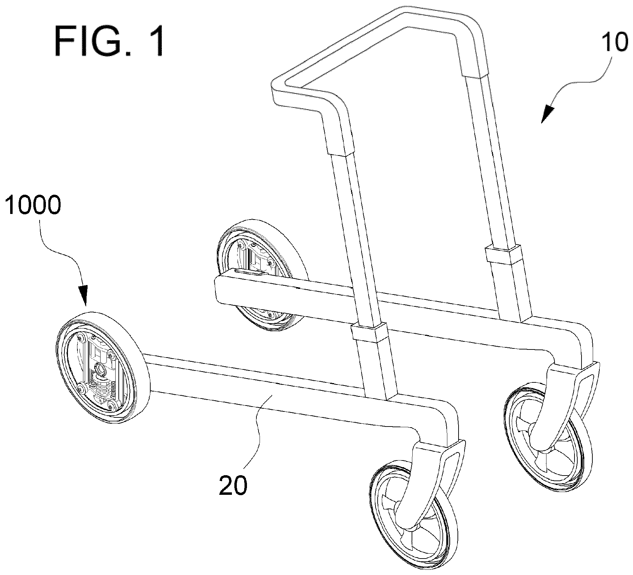

Referring to FIG. 1, the safety wheel 1000 of the present disclosure may be mounted on a front wheel or a rear wheel of the walking aid 10 in order to provide a braking force to the walking aid 10.

In more detail, the safety wheel 1000 is connected to the body frame 20 of the walking aid 10, and a user walk while gripping the walking aid 10 and transmitting a predetermined amount of weight to the walking aid 10.

On the other hand, when the user does not grip the walking aid 10, a braking force is applied to the safety wheel 1000 to limit the movement of the walking aid 10, which provides an effect of preventing the walking aid 10 from arbitrarily moving.

In addition, another braking force may be applied on the safety wheel 1000 to limit the movement of walking aid 10 (driving of the safety wheel 1000) and may prevent the user from falling when the walking aid 10 slips due to a load higher than a preset load occurred by an unexpected situation or falls while gripping the walking aid 10 while moving.

An operation and an embodiment of the safety wheel 1000 will be described in detail.

### Embodiment 1

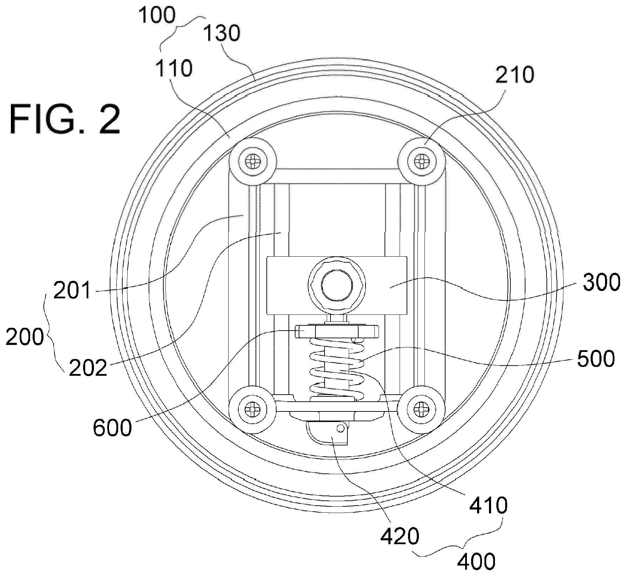

Referring to FIG. 2, the safety wheel 1000 includes a main wheel 100, an inner frame 200, and a sliding block 300.

The main wheel 100 has a ring shape, and includes a rim 110 and a tire 130. The rim 110 has a ring or cyclic shape connected along a circular path and has a hollow central part. The tire 130 may be further formed on the outer surface of the rim 110 to provide a friction force between the ground and the rim 110 so that the rim 110 may be smoothly driven.

The inner frame 200 includes the main wheel 100, that is, the inner frame 200 includes an auxiliary wheel 210 rotating in contact with an inner surface of the hollow central part of the rim 110. The inner frame 200 is disposed on the inner surface of the hollow central part of the rim 110, and the auxiliary wheel 210 is rotatably installed at a corner part of the inner frame 200. That is, the auxiliary wheel 210 is rotatably installed on the inner frame 200 so as to be in contact with the inner surface of the rim 110.

At least two auxiliary wheels 210 may be installed on the inner frame 200 and may be configured to connect the inner frame 200 to the main wheel 100, and preferably, four auxiliary wheels may be provided to stably connect the inner frame 200 to the main wheel 100. Due to this configuration, when the main wheel 100 rotates, the auxiliary wheel 210 rotates while the inner frame 200 is fixed, so that the walking aid 10 can move.

Meanwhile, the auxiliary wheel 210 may be rotatably installed on a wheel bracket 203 formed at the corner part of the inner frame 200. Any one of the auxiliary wheels 210 of the two or more auxiliary wheels 210 may be configured as a pair, symmetrical with respect to the wheel bracket 203.

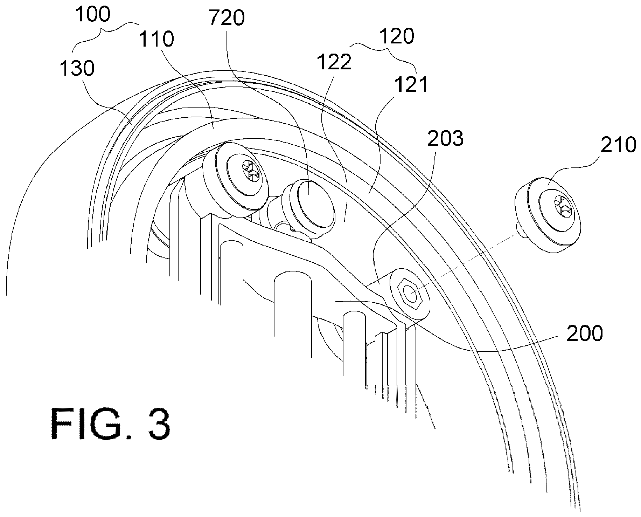

Referring to FIG. 3, on an inner surface of the main wheel 100, a guide part 120 to which the auxiliary wheel 210 is in contact is formed while forming a ring shape along the inner surface of the main wheel 100. A pair of wheel guide grooves 121 are set with the auxiliary wheel 210 and may be formed to be slightly recessed in opposite edges of the guide part 120, respectively.

That is, while the auxiliary wheel 210 is set with the wheel guide groove 121, the guide part 120 is disposed between the auxiliary wheels 210, thereby minimizing a gap between the auxiliary wheel 210 and the guide part 120. Thereby, there is an advantage that can improve durability by preventing the occurrence of a gap between the main wheel 100 and the auxiliary wheel 210 when the main wheel 100 is driven.

The sliding block 300 is guided by the inner frame 200 and is installed to be movable up and down. That is, the inner frame 200 is further provided with an outer frame 201 and a pair of rail frames 202 extending up and down while being separated from each other by a predetermined distance inside the outer frame 201. In this case, the sliding block 300 is coupled to the rail frame 202 and may move vertically along the extending longitudinal direction of the rail frame 202.

### Embodiment 2

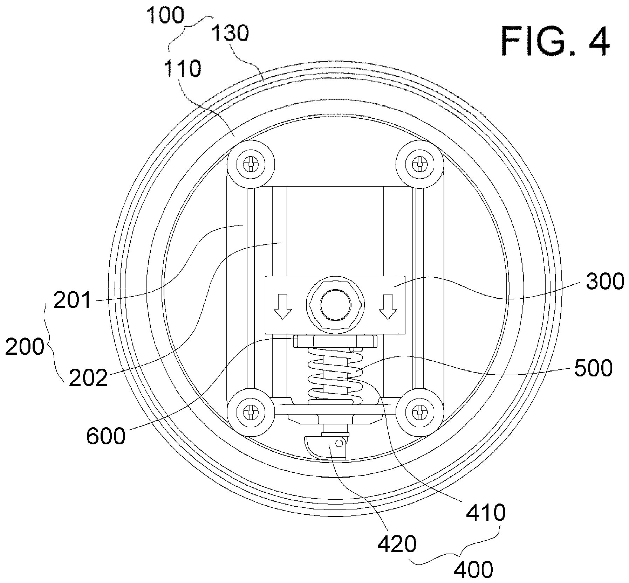

Referring to FIGS. 2 to 4, the safety wheel of the present disclosure may include a main wheel 100, an inner frame 200, and the sliding block 300, and may further include a lower braking unit 400 and a first elastic member 500.

The lower braking unit 400 is installed on the lower side of the inner frame 200 to be movable in a vertical direction. The lower braking unit 400 includes a lower rod 410 extending through a lower side of the outer frame 201 of the inner frame 200 and a lower friction part 420 installed at the lower end of the lower rod 410. The lower friction part 420 is preferably made of a material having a high friction coefficient and provides a braking force to the main wheel 100 while being in contact with the inner surface of the main wheel 100 according to the vertical movement of the lower rod 410.

Meanwhile, an upper end of the lower rod 410 is in contact with the lower surface of the sliding block 300, and the lower rod 410 also moves according to the vertical movement of the sliding block 300. That is, when a load is transmitted to the sliding block 300 and the sliding block 300 descends, the sliding block 300 presses the upper end of the lower rod 410 to lower the lower rod 410, and at the same time, the lower friction part 420 contacts the inner surface of the main wheel 100, thereby providing the braking force to the main wheel 100.

The first elastic member 500 which is formed to surround the outer side of the lower rod 410 with a coil spring having a predetermined modulus of elasticity, elastically supports the lower rod 410, and pulls the lower rod 410 upward. In addition, the first elastic member 500 preferably has a modulus of elasticity capable of supporting the weight of the user transmitted to the sliding block 300.

Therefore, only when a load equal to or higher than the modulus of elasticity of the first elastic member 500 is transmitted to the sliding block 300, the first elastic member 500 is compressed and the lower rod 410 descends to move the lower braking unit 400. This situation is a case in which a safety accident such as a user falling due to an unexpected accident occurs, and since the weight of the user moves to one side, a high load is transferred to the sliding block 300, and thus the sliding block 300 may descend.

Accordingly, when a load equal to or greater than the modulus of elasticity of the first elastic member 500 is transmitted to the sliding block 300, the lower rod 410 descends, and the lower friction part 420 provides the braking force to the main wheel 100 while maintaining a state of contact with the inner surface of the main wheel 100.

On the contrary, when the load transmitted to the sliding block 300 is reduced, the first elastic member 500 pulls the lower rod 410 upward and the lower friction part 420 is separated from the inner surface of the main wheel 100, thereby releasing the braking force acting on the main wheel 100.

Meanwhile, the lower friction part 420 provides a braking force to the main wheel 100 while in contact with a braking friction part 122 formed in the center of the guide part 120 of Embodiment 1, and the braking friction part 122 is preferably made of the material having a high friction coefficient. Thereby, the braking force provided to the main wheel 100 may be further improved.

### Embodiment 3

Referring to FIGS. 2 to 4, in order to adjust a modulus of elasticity of a first elastic member 500, a lower braking unit 400, that is, the lower rod 410, may further include a control knob 600 contacting an upper side of the first elastic member 500. The first elastic member 500 maintains a state of being in contact with the lower surface of a adjustment knob 600, and the adjustment knob 600 moves up and down to adjust the modulus of elasticity of a first elastic member 500. Therefore, it is possible to set whether the lower braking unit 400 is operated in response to the weight of the user gripping the walking aid 10.

### Embodiment 4

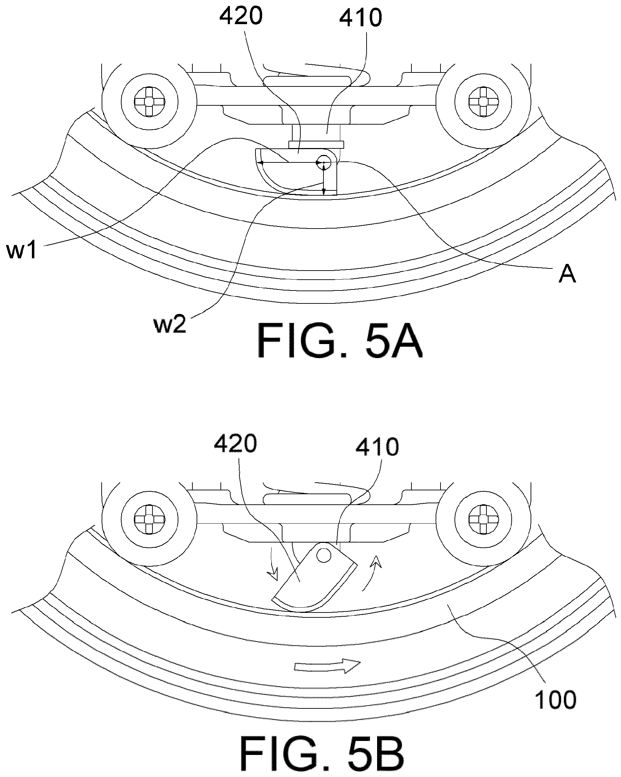

Referring to FIG. 5, a lower friction part 420 included in a lower braking unit 400 may be rotatably installed at a lower end of a lower rod 410. As the lower friction part 420 rotates, the lower friction part 420 may pressurize an inner surface of a main wheel 100 with a higher pressing force, thereby improving the braking force applied to the main wheel 100.

More specifically, when a lower braking unit 400 descends, one surface of the lower friction part 420 is in contact with the inner surface of the main wheel 100 to provide the braking force (See FIG. 5A).

Thereafter, when the main wheel 100 is further rotated in a traveling direction while the lower friction part 420 is in contact with the inner surface of the main wheel 100, the lower friction part 420 rotates to press the inner surface of the main wheel 100 with a higher pressing force to provide the braking force to the main wheel 100 (See FIG. 5B).

The lower friction part 420 is hinged to the lower rod 410, and the hinge-coupled part corresponds to a rotation shaft A. It is preferable that the widths of the lower friction part 420 has different length values. That is, a width w2 in the lateral direction is formed to have a length longer than a length of a width w1 in the downward direction of the lower friction part 420 based on the rotation shaft A (See FIG. 5A). Therefore, when the main wheel 100 is further rotated in the traveling direction while the lower friction part 420 is in contact with the inner surface of the main wheel 100, the lower friction part 420 may rotate to press the inner surface of the main wheel 100 with the higher pressing force to provide the braking force to the main wheel 100.

Meanwhile, an elastic member for elastically supporting the lower friction part 420 may be further provided between the lower friction part 420 and the lower rod 410, and the elastic member may preferably prevent the lower friction part 420 from rotating in a downward direction by gravity when the lower friction part 420 is separated from the main wheel 100.

### Embodiment 5

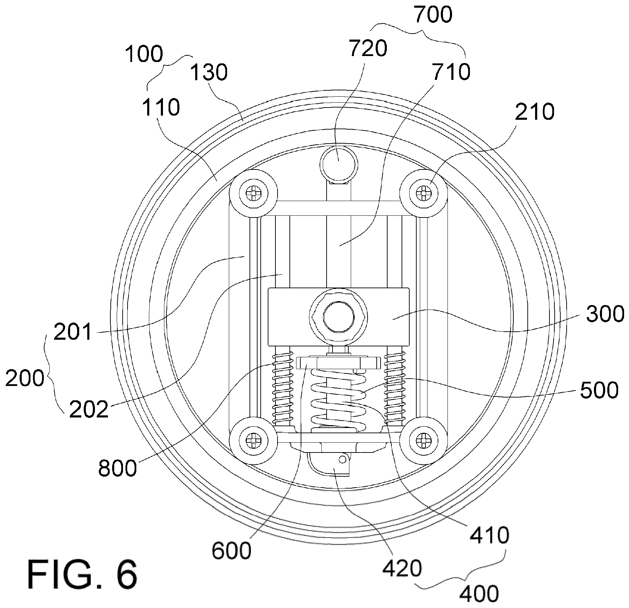

Referring to FIG. 6, the safety wheel of the present disclosure includes a main wheel 100, an inner frame 200, and a sliding block 300, and further includes an upper braking unit 700 and a second elastic member 800. The upper braking unit 700 is installed to be vertically movable on an upper side of the inner frame 200. The upper braking unit 700 includes an upper rod 710 extending through an upper side of an outer frame 201 of the inner frame 200 and an upper friction part 720 installed at an upper end of the upper rod 710 to contact the inner surface of the main wheel 100. The upper friction part 720 is preferably made of a material having a high friction coefficient.

Meanwhile, a lower end of the upper rod 710 is set on the upper surface of the sliding block 300, and the upper rod 710 may move vertically together with the sliding block 300 according to the movement of the sliding block 300. When the sliding block 300 moves upward, the upper friction part 720 contacts the inner surface of the main wheel 100 to provide a braking force so that a driving of the main wheel 100 is limited. Conversely, when the sliding block 300 moves downward, the upper rod 710 moves downward together with the sliding block 300 by gravity, and the upper friction part 720 is separated from the inner surface of the main wheel 100, thereby releasing the braking force applied on the upper friction part 720.

The second elastic member 800 is in contact with a lower surface of the sliding block 300 with a coil spring and is configured to elastically support the sliding block 300. That is, when the second elastic member 800 elastically supports the sliding block 300 to be pulled upward, the upper friction part 720 of the upper rod 710 set on the upper surface of the sliding block 300 may be in contact with the inner surface of the main wheel 100, thereby providing continuous braking force to the main wheel 100.

Conversely, when a load equal to or higher than a modulus of elasticity of the second elastic member 800 is transmitted to the sliding block 300 and the second elastic member 800 is compressed, the sliding block 300 descends and the upper friction part 720 is separated from the inner surface of the main wheel 100. Therefore, the upper braking unit 700 may selectively provide the braking force to the main wheel 100 according to a user gripping a walking aid 10.

Meanwhile, the upper friction part 720 provides the braking force to the main wheel 100 while in contact with a braking friction part 122 formed in a center of the guide part 120 of Embodiment 1, and a braking friction part 122 is preferably made of the material having a high friction coefficient.

Referring to FIGS. 1 to 6, the safety wheel 1000 to which all of Embodiments 1 to 5 are applied may be configured, and may be installed in the walking aid 10. As the first elastic member 500 is configured to have a larger modulus of elasticity than the second elastic member 800, the braking force acting on the main wheel 100 may be used separately.

The present disclosure by such a configuration has an advantage of solving the problems of the conventional art in which the walking aid 10 moves arbitrarily, and preventing the risk of an user's unexpected fall accident.

While the embodiments of the present disclosure have been described, it will be apparent to those skilled in the art that various modifications and variations can be made in the present disclosure through addition, change, omission, or substitution of components without departing from the spirit of the invention as set forth in the appended claims, and such modifications and changes may also be included within the scope of the present disclosure.

## Claims

1. A safety wheel comprising:
a ring-shaped main wheel (100);
an inner frame (200) positioned inside the main wheel (100), wherein the inner frame comprising at least two auxiliary wheels (210) that come into contact with an inner surface of the main wheel (100) and rotate when the main wheel (100) is driven; and
a sliding block (300) provided to be movable under the guide of the inner frame (200).

2. The safety wheel of claim 1, further comprising:
a lower braking unit (400) provided at a lower side of the inner frame (200) and configured such that a first end thereof comes into contact with or is separated from the inner surface of the main wheel (100) according to a movement of the sliding block (300); and
a first elastic member (500) configured to elastically support the lower braking unit (400) such that the first elastic member (500) is compressed when a load equal to or higher than a preset modulus of elasticity is transferred thereto to cause the sliding block (300) to move the lower braking unit (400).

3. The safety wheel of claim 1, wherein the auxiliary wheels (210) are configured as a pair, wherein the safety wheel further comprises a guide part (120) provided on the inner surface of the main wheel (100), the guide part (120) being provided with a wheel guide groove (121) recessed from a surface at each of opposite edges of the guide part, wherein the auxiliary wheels (210) are configured respectively to come into contact with the wheel guide grooves (121) provided on the opposite edges of the guide part.

4. The safety wheel of claim 2, further comprising a control knob (600) provided in the lower braking unit (400) to adjust the modulus of elasticity of the first elastic member (500).

5. The safety wheel of claim 2 or 3, wherein the lower braking unit (400) further comprises a lower friction part (420) rotatably at the first end thereof, wherein the lower friction part (420) is configured to provide a braking force by further rotating in a moving direction of the main wheel (100) while maintaining the contact with the inner surface of the main wheel (100) to provide a higher pressing force to the inner surface of the main wheel (100).

6. The safety wheel of any one of preceding claims 1 to 5, wherein the sliding block (300) is connected to a body frame (20) of a walking aid (10) and configured to transfer a load to the body frame (20) so that the sliding block (300) is moved when a user walks.
